# EUROPÄISCHE PATENTSCHRIFT

(11) **EP 0 407 926 B1**
(45) Veröffentlichungstag und Bekanntmachung des Hinweises auf die Patenterteilung: **18.01.1995**
(21) Anmeldenummer: 90113036.9
(22) Anmeldetag: 07.07.1990
(51) Int. Cl.: C08K 5/524, C08K 5/527, C08K 5/5393, C08L 71/12, C08L 81/02

(54) **Phosphorverbindungen als Kristallisationsverzögerer in Polyphenylenetherformmasse**
Phosphorus compounds as crystallization retardants in poly(phenylene ether) moulding compositions
Retardateur de cristallisation à base de composés phosphorés pour masse de moulage d'éther de polyphénylene

(30) Priorität: 12.07.1989 DE 3922901
(43) Veröffentlichungstag der Anmeldung: 16.01.1991
(73) Patentinhaber: HOECHST AKTIENGESELLSCHAFT, 65926 Frankfurt am Main (DE)
(72) Erfinder: Kiesel, Harald, D-8906 Gersthofen (DE); Pfahler, Gerhard, Dr., D-8900 Augsburg (DE)

(56) Entgegenhaltungen:
- EP-A- 0 036 278
- US-A- 4 892 930
- PATENT ABSTRACTS OF JAPAN vol. 12, no. 433 (C-543)(3280) 15 November 1988,& JP-A-63 159470
- CHEMICAL ABSTRACTS, vol. 93, no. 10, 08 September 1980 Columbus, Ohio, USA & JP-A-55 052347

## Beschreibung

Die Erfindung bezieht sich auf die Verwendung bestimmter organischer Phosphorverbindungen als Kristallisationverzögerer in einer Polyphenylenetherformmasse.

Polyphenylenether, insbesondere Polyphenylensulfid, zählen aufgrund ihres linearen Aufbaus zu den hochkristallinen Polymeren. Bei normaler Verarbeitung tritt sehr schnell Kristallisation ein, die unter anderem verhindert, daß transparente Artikel aus diesen Polymeren hergestellt werden können. Weiterhin stört die hohe Kristallisationsgeschwindigkeit bei Verarbeitungsverfahren, bei welchen molekulare Orientierungsvorgänge, beispielsweise beim Recken, eine Rolle spielen. Insbesondere für die Herstellung von Fasern und Folien wäre ein verzögerte Kristallisation von Vorteil, da kann ein größerer Verarbeitungsspielraum im amorphen Bereich vorhanden wäre.

Zur Steuerung der Kristallisation bei hochkristallinen Polymeren durch Kristallisationsverzögerer sind schon viele Vorschläge gemacht worden.

So ist ein Verfahren zur Kristallisation von Polyarylensulfid bekannt, bei welchem das Polymere mit polyvalenten Metallkationen in vorzugsweise wäßriger Lösung behandelt wird (vgl. EP-A 144 987). Durch diese Behandlung wird zwar die Kristallisationstemperatur in der Schmelze erniedrigt und die Kristallisationsgeschwindigkeit verringert, gleichzeitig aber ein zusätzlicher Verfahrensschritt mit wäßrigen Lösungen notwendig.

Es bestand somit die Aufgabe, ein Mittel zur Verzögerung der Kristallisation bei Polyphenylenethern zu finden, welches sich mit geringem Aufwand in das Polymere einarbeiten läßt.

Gefunden wurde, daß die Lösung der Aufgabe durch die Verwendung bestimmter organischer Phosphorverbindungen ermöglicht wird.

Diese Phosphorverbindungen sind an sich als Wärmestabilisatoren für Polymere, auch für Polyphenylenether, bekannt (vgl. EP-A 36 278, JP-A 55 052347, JP-A 63 159470). Nicht bekannt war, daß diese Verbindungen auch als Kristallisationsverzögerer wirken können.

Die Erfindung betrifft somit die Verwendung einer organischen Phosphorverbindung der Formel II 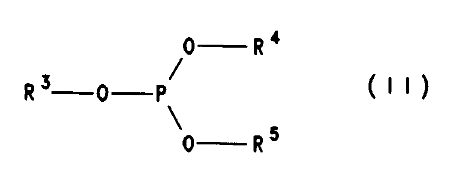
worin R³, R⁴ und R⁵ gleich oder verschieden sind und einen Phenylrest, der durch eine oder mehrere C₁-C₄-Alkylgruppen substituiert sein kann, bedeuten, der Formel III 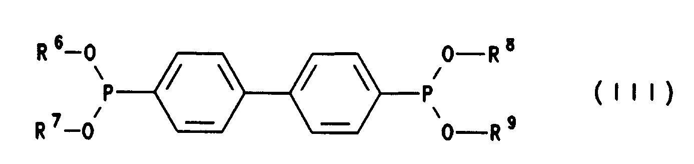
worin R⁶, R⁷, R⁸ und R⁹ die Bedeutung von R³, R⁴ und R⁵ haben, oder der Formel IV 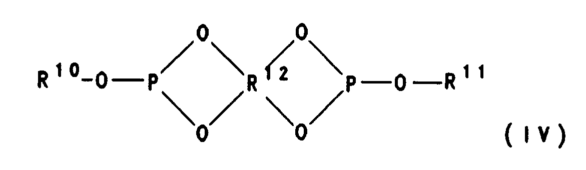
worin R¹⁰ und R¹¹ gleich oder verschieden sind und einen geradkettigen C₁₂-C₂₂-Alkylrest oder einen Phenylrest, der durch eine oder mehrere C₁-C₄-Alkylgruppen substituiert sein kann, bedeuten und R¹² ein Pentaerythritylrest ist, in einer Menge von 0,05 bis 5 Gew.-Teilen, bezogen auf 100 Gew.-Teile Polymer, als Kristallisationsverzögerer in einer Polyphenylenetherformmasse, im wesentlichen bestehend aus einem Polymer, welches Einheiten der Formel I 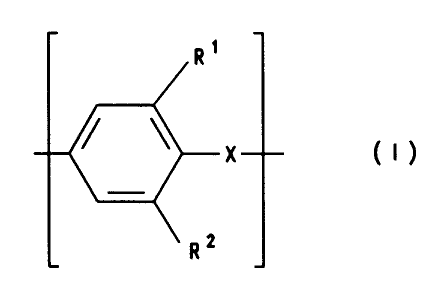
worin R¹ und R² gleich oder verschieden sind und ein Wasserstoffatom oder einen geradkettigen oder verzweigten C₁-C₄-Alkylrest bedeuten und X ein Sauerstoff- oder Schwefelatom ist, enthält.

Die Polyphenylenetherformmasse für die erfindungsgemäße Verwendung besteht im wesentlichen aus einem Polymer, welches Einheiten der Formel I enthält 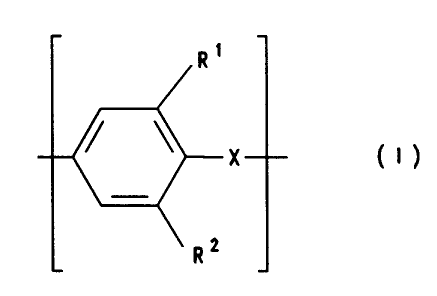
In dieser Formel sind R¹ und R² gleich oder verschieden und bedeuten ein Wasserstoffatom oder einen geradkettigen oder verzweigten C₁-C₄-Alkylrest. R¹ und R² sind vorzugsweise ein Wasserstoffatom oder ein C₁-C₂-Alkylrest, insbesondere ein Wasserstoffatom oder eine Methylgruppe. X ist ein Sauerstoffatom oder ein Schwefelatom, bevorzugt ein Schwefelatom. Bevorzugt besteht das Polymer vollständig aus Einheiten der Formel I. Die Molmasse beträgt im allgemeinen ca 5000 bis ca 200000, das entspricht 20 bis 2000 Einheiten der Formel I.

Geeignete Polyphenylenether sind Poly(thio-1,4-phenylen) und Poly(2,6-dimethyl-1,4-phenylether). Besonders bevorzugt ist Polyphenylensulfid. Derartige Polymere sind, auch unstabilisiert und frei von anderen Additiven, im Handel erhältlich. Sie sind jedoch auch herstellbar nach dem Verfahren gemäß EP 144 987.

Für die erfindungsgemäße Verwendung werden 0,05 bis 5, vorzugsweise 0,1 bis 1 Gew.-Teile, bezogen auf 100 Gew.-Teile Polymer, einer organischen Phosphorverbindung der Formel II, III oder IV eingesetzt: 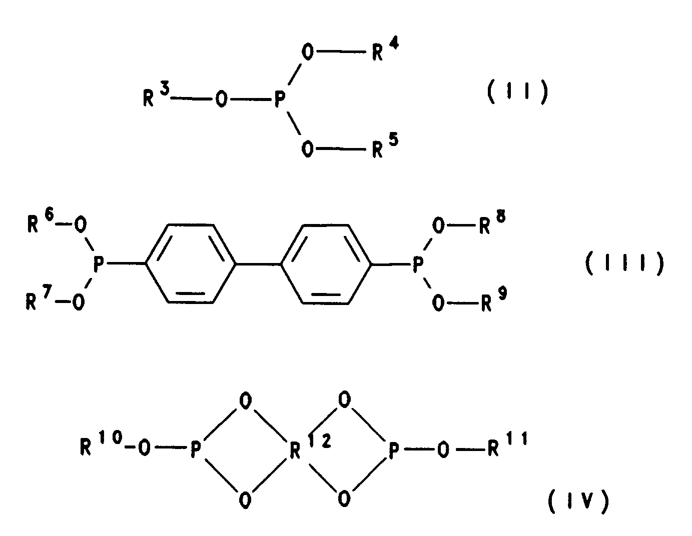
In diesem Formeln sind R³, R⁴, R⁵, R⁶, R⁷, R⁸ und R⁹ gleich oder verschieden und bedeuten einen Phenylrest, der durch eine oder mehrere C₁-C₄, vorzugsweise verzweigte C₄-Alkylgruppen substituiert sein kann. Vorzugsweise sind R³, R⁴, R⁵, R⁶, R⁷, R⁸ und R⁹ eine 2,4-Di-t-butylphenylgruppe.

R¹⁰ und R¹¹ sind gleich oder verschieden und bedeuten einen C₁₂-C₂₂-, vorzugsweise C₁₆-C₁₈-Alkylrest oder einen Phenylrest, der durch eine oder mehrere C₁-C₄, vorzugsweise verzweigte C₄-Alkylreste substituiert sein kann. Vorzugsweise sind R¹⁰ und R¹¹ ein Stearylrest oder eine 2,4-Di-t-butylphenylgruppe.

R¹² ist ein Pentaerythritylrest.

Besonderes bevorzugte Phosphorverbindungen sind Tris-(2,4-di-t-butylphenyl)-phosphit und Tetrakis-(2,4-di-t-butylphenyl)-4,4'-biphenylen-diphosphonit.

Neben den erfindungsgemäß einzusetzenden Phosphorverbindungen kann die Polyphenylenetherformmasse noch zusätzlich Antioxidantien, UV-Absorber, Lichtschutzmittel, Metalldesaktivatoren, Stabilisatoren, Füllstoffe, Verstärkungsmittel, Gleitmittel, Pigmente, optische Aufheller, Flammschutzmittel oder Antistatika enthalten.

Das Einmischen der Phosphorverbindungen in die Polyphenylenether geschieht auf die bei der Kunststoffcompoundierung übliche Weise. So können die Phosphorverbindungen als pulverförmiger Feststoff dem Kunststoffpulver oder -granulat beigemischt werden oder in Form eines Konzentrats mit bis zu 50 Gew.-% Wirkstoff oder in Form einer Dispersion oder Emulsion in einem geeigneten Dispergiermittel, welches hinterher entfernt wird, zudosiert werden.

Durch den Zusatz der Phosphorverbindungen der Formeln II, III oder IV wird eine deutliche Verzögerung der Kristallisation erreicht. Außerdem wirken diese Verbindungen zusätzlich als Wärmestabilisatoren.

Das nachfolgende Beispiel soll die Erfindung erläutern.

### Beispiel

Polyphenylensulfid (Dichte 1,34 g/cm³, Smp 283°C) wurde 12 h bei 140°C im Vakuumtrockenschrank getrocknet.

Je 100 Gew.-Teile des pulverförmigen Produktes wurden mit 0,5 Gew.-Teilen der pulverförmigen Phosphorverbindung 1 oder 2 in einem langsam laufenden Rührwerk gemischt. Aus den Mischungen wurden auf einer Spritzgußmaschine Plättchen mit den Maßen 1 x 60 x 60 mm hergestellt (Temperaturprofil 300-310-320-330°C; Werkzeugtemperatur 100°C). Zur Beurteilung der Kristallinität wurde an den Prüfkörpern die Transparenz mit einem Transparenzmeßgerät (Typ LT12/Dr. B. Lange, Berlin) bestimmt. Der Kristallisationsvorgang wurde mittels Differential-Scanning-Calorimetrie (DSC) untersucht, dabei wurde sowohl die Nachkristallisation während des ersten Aufheizvorganges als auch die Kristallisation während der definierten Abkühlung der Probe verfolgt.

| Bedingungen der DSC: | |
|---|---|
| Temperaturbereich: | 10°C - 310°C |
| Aufheiz-/Abkühlrate: | 10 K/min |
| Spülung: | Stickstoff |
| Probemenge: | im Bereich 6 - 7 mg |
| Meßgerät: | Typ TA 3000/Fa. Mettler |

Die Ergebnisse der Messungen sind in der Tabelle zusammengefaßt.

Phosphorverbindung 1 = Tris-(2,4-di-t-butylphenyl)-phosphit 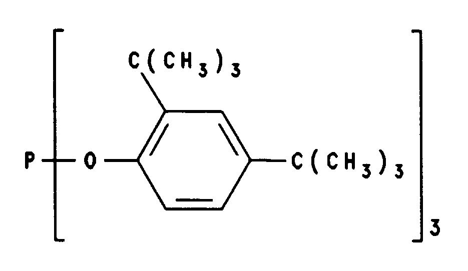
Phosphorverbindung 2 = Tetrakis-(2,4-di-t-butylphenyl)-4,4'-biphenylendiphosphonit

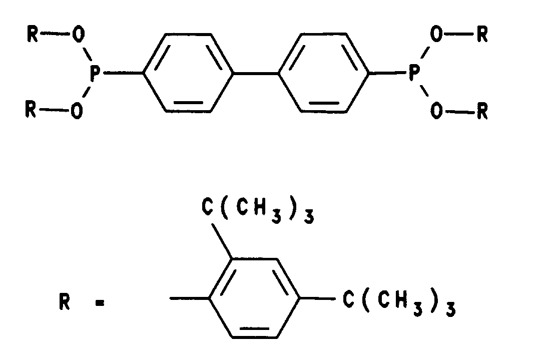

### Versuchsergebnisse:

### a) Nachkristallisation während des ersten Aufheizvorganges

Trotz der hohen Kristallinität von Polyphenylensulfid tritt beim Spritzgießen keine vollständige Kristallisation ein. Daher ist in der DSC bei höherer Temperatur eine Nachkristallisation zu beobachten.

Für das reine PPS liegt das Maximum der Nachkristallisation bei 120°C. Bei Zusatz der Phosphorverbindung 1 liegt dieser Kristallisationspeak bei 127°C. Phosphorverbindung 2 verschiebt die Nachkristallisation auf 129°C. Die jeweils höheren frei werdenden Wärmeströme der modifizierten Typen lassen ebenfalls auf eine geringere Kristallinität schließen.

### b) Kristallisation während des Abkühlens

Die Polymerschmelze wird definiert abgekühlt zur Untersuchung der Kristallisation .

Das unmodifizierte PPS hat das Maximum des Kristallisationspeaks bei 246°C. Bei der mit Phosphorverbindung 1 modifizierten Probe liegt die Peakspitze um 30 K niedriger, d.h. das Maximum der Kristallisation liegt bei 216°C.

### c) Transparenz

Mit Zusatz von 0,5 Teilen der verwendeten organischen Phosphor-Verbindung ist es möglich, bei dem 1 mm-Prüfplättchen eine Lichtdurchlässigkeit (Transmission) bis 60 % zu erzielen. Die unausgerüsteten Prüfkörper sind opak nach der Verarbeitung.

**Tabelle**

| Ergebnisse der DSC-Analyse | | | |
|---|---|---|---|
| | PPS ohne Additiv | PPS + 0,5 Teile P-Verb. 1 | PPS + 0,5 Teile P-Verb. 2 |
| 1. Aufheizen Nachkristallisation | | | |
| Beginn °C | 100 | 108 | 107 |
| Maximum °C | 120 | 127 | 129 |
| Ende °C | 130 | 142 | 144 |
| Wärmeübergang J/g | 11,5 | 29,0 | 27,0 |
| Schmelztemperatur Maximum °C | 283 | 283 | 284 |
| Schmelzwärme J/g | 45 | 44 | 47 |
| | | | |

| Abkühlen Kristallisation | | | |
|---|---|---|---|
| Beginn °C | 260 | 237 | 249 |
| Maximum °C | 246 | 216 | 233 |
| Ende °C | 200 | 192 | 202 |
| Wärmeübergang J/g | 51 | 49 | 52 |
| | | | |
| Transparenz % Transmission | opak | 60,6 | 49,5 |

## Patentansprüche

1. Verwendung einer organischen Phosphorverbindung der Formel II 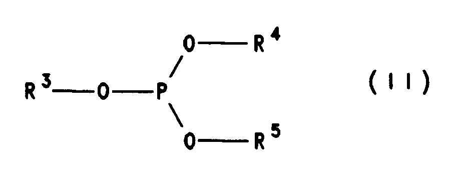 worin R³, R⁴ und R⁵ gleich oder verschieden sind und einen Phenylrest, der durch eine oder mehrere C₁-C₄-Alkylgruppen substituiert sein kann, bedeuten, der Formel III 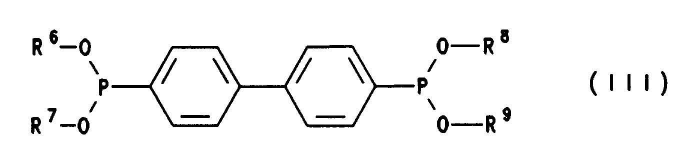 worin R⁶, R⁷, R⁸ und R⁹ die Bedeutung von R³, R⁴ und R⁵ haben, oder der Formel IV 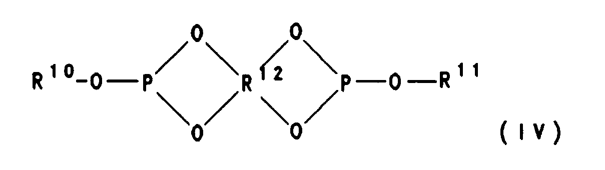 worin R¹⁰ und R¹¹ gleich oder verschieden sind und einen geradkettigen C₁₂-C₂₂-Alkylrest oder einen Phenylrest, der durch eine oder mehrere C₁-C₄-Alkylgruppen substituiert sein kann, bedeuten und R¹² ein Pentaerythritylrest ist, in einer Menge von 0,05 bis 5 Gew.-Teilen, bezogen auf 100 Gew.-Teile Polymer, als Kristallisationsverzögerer in einer Polyphenylenetherformmasse, im wesentlichen bestehend aus einem Polymer, welches Einheiten der Formel I 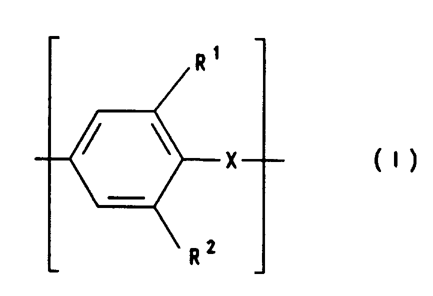 worin R¹ und R² gleich oder verschieden sind und ein Wasserstoffatom oder einen geradkettigen oder verzweigten C₁-C₄-Alkylrest bedeuten und X ein Sauerstoff- oder Schwefelatom ist, enthält.

2. Verwendung nach Anspruch 1, dadurch gekennzeichnet, daß der Polyphenylenether ein Polyphenylensulfid ist.

3. Verwendung nach Anspruch 1, dadurch gekennzeichnet, daß die organische Phosphorverbindung eine Verbindung der Formel II ist.

4. Verwendung nach Anspruch 1, dadurch gekennzeichnet, daß die organische Phosphorverbindung eine Verbindung der Formel III ist.

5. Verwendung nach Anspruch 1, dadurch gekennzeichnet, daß die organische Phosphorverbindung Tris-(2,4-di-t-butylphenyl)-phosphit ist.

6. Verwendung nach Anspruch 1, dadurch gekennzeichnet, daß die organische Phosphorverbindung Tetrakis-(2,4-di-t-butylphenyl)-4,4'-biphenylen-diphosphonit ist.

## Claims

1. Use of an organic phosphorus compound of the formula II 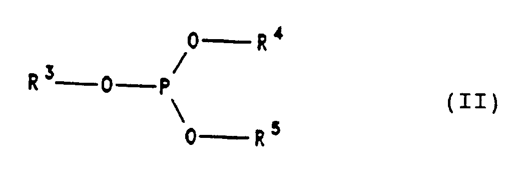 in which R³, R⁴ and R⁵ are identical or different and are a phenyl radical, which may be substituted by one or more C₁-C₄-alkyl groups, of the formula III 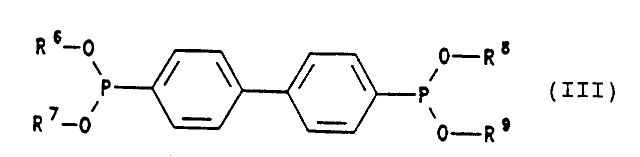 in which R⁶, R⁷, R⁸ and R⁹ have the meanings of R³, R⁴ and R⁵, or of the formula IV 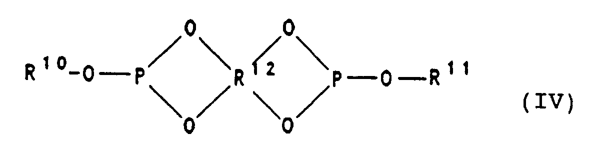 in which R¹⁰ and R¹¹ are identical or different and are a straight-chain C₁₂-C₂₂-alkyl radical or a phenyl radical which may be substituted by one or more C₁-C₄-alkyl groups, and R¹² is a pentaerythrityl radical, in an amount of 0.05 to 5 parts by weight, relative to 100 parts by weight of polymer, as a crystallization inhibitor in a polyphenylene ether molding composition essentially composed of a polymer which contains units of the formula I 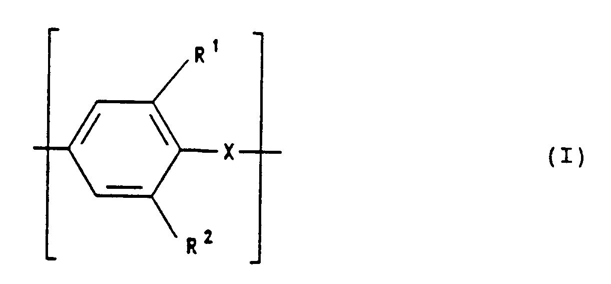 in which R¹ and R² are identical or different and are a hydrogen atom or a straight-chain or branched C₁-C₄-alkyl radical and
X is an oxygen atom or a sulfur atom.

2. Use as claimed in claim 1, wherein the polyphenylene ether is a polyphenylene sulfide.

3. Use as claimed in claim 1, wherein the organic phosphorus compound is a compound of the formula II.

4. Use as claimed in claim 1, wherein the organic phosphorus compound is a compound of the formula III.

5. Use as claimed in claim 1, wherein the organic phosphorus compound is tris-(2,4-di-t-butylphenyl) phosphite.

6. Use as claimed in claim 1, wherein the organic phosphorus compound is tetrakis-(2,4-di-t-butylphenyl) 4,4'-biphenylenediphosphonite.

## Revendications

1. Utilisation d'un composé organique du phosphore répondant à la formule II : 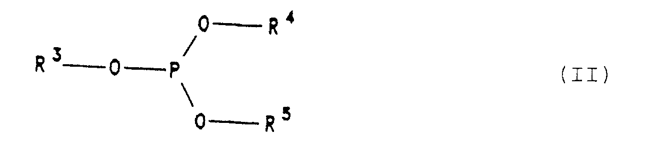 dans laquelle R³, R⁴ et R⁵ sont identiques ou différents et désignent un radical phényle qui peut être substitué par un ou plusieurs groupes alkyle en C₁-C₄, répondant à la formule III : 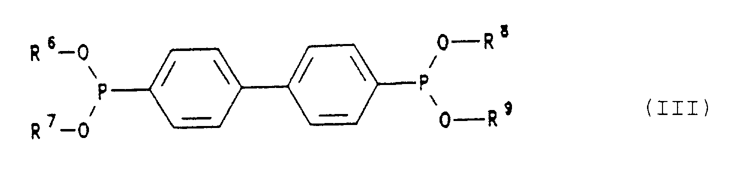 dans laquelle R⁶, R⁷, R⁸ et R⁹ ont les mêmes significations que R³, R⁴ et R⁵, ou répondant à la formule IV : 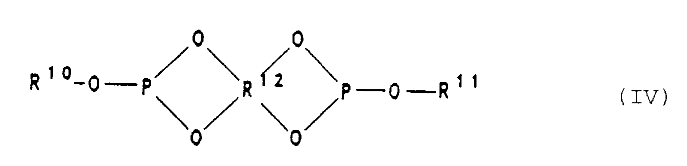 dans laquelle R¹⁰ et R¹¹ sont identiques ou différents et désignent un radical alkyle linéaire en C₁₂-C₂₂ ou un radical phényle qui peut être substitué par un ou plusieurs groupes alkyle en C₁-C₄, et R¹² est un radical pentaérythrityle, à raison de 0,05 à 5 parties en poids pour 100 parties en poids de polymère, comme retardateurs de cristallisation dans une matière à mouler de poly(éther de phénylène), essentiellement constituée d'un polymère qui contient des motifs répondant à la formule I : 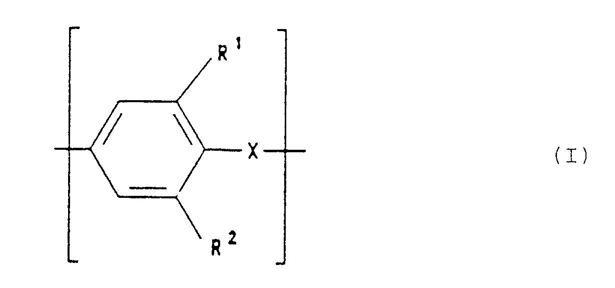 dans laquelle R¹ et R² sont identiques ou différents et désignent un atome d'hydrogène ou un radical alkyle en C₁-C₄ linéaire ou ramifié, et X est un atome d'oxygène ou de soufre.

2. Utilisation selon la revendication 1, caractérisée en ce que le poly(éther de phénylène) est un poly(sulfure de phénylène).

3. Utilisation selon la revendication 1, caractérisée en ce que le composé organique du phosphore est un composé répondant à la formule II.

4. Utilisation selon la revendication 1, caractérisée en ce que le composé organique du pnosphore est un composé répondant à la formule III.

5. Utilisation selon la revendication 1, caractérisée en ce que le composé organique du phosphore est le phosphite de tris-(2,4-di-t-butylphényle).

6. Utilisation selon la revendication 1, caractérisée en ce que le composé organique du phosphore est le diphosphonite de tétrakis-(2,4-di-t-butylphényl)-4,4'-biphénylène.
